(19) Europäisches Patentamt
European Patent Office
Office européen des brevets

(11) Publication number : **0 562 823 A1**

(12) # EUROPEAN PATENT APPLICATION

(21) Application number : **93302198.2**

(22) Date of filing : **23.03.93**

(51) Int. Cl.$^5$ : **G03B 31/02,** G11B 7/00

(30) Priority : **24.03.92 JP 97172/92**

(43) Date of publication of application : **29.09.93 Bulletin 93/39**

(84) Designated Contracting States : **DE FR GB**

(71) Applicant : **SONY CORPORATION**
**6-7-35 Kitashinagawa Shinagawa-ku**
**Tokyo 141 (JP)**

(72) Inventor : **Ozaki, Yoshio, c/o Master Engineering Corporation**
**Yamaizumi Bldg 6F, 12-4 Kitashinagawa 5-chome**
**Shinagawa-ku, Tokyo (JP)**

(74) Representative : **Cotter, Ivan John et al**
**D. YOUNG & CO., 21 New Fetter Lane**
**London EC4A 1DA (GB)**

(54) **Motion picture films and recording and playback apparatus therefor.**

(57) Unused areas (6) available between effective picture image areas (5) of a 35 mm motion picture film (1) are used for optically recording digital audio signals. The space for recording the digital audio signals can be sufficient to record a digital audio signal sampled with a high frequency and quantized with a large number of bits. The digital audio recording areas (6) are not subject to damage and therefore data errors are unlikely to occur.

F I G. 2

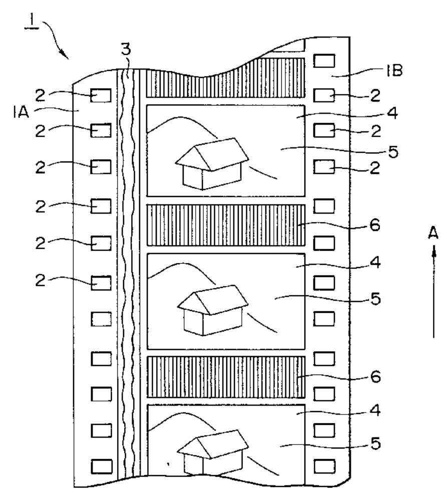


EP 0 562 823 A1

This invention relates to motion picture films, motion picture film recording apparatus for recording an audio signal on motion picture film, and motion picture film playback apparatus for reproducing an audio signal from motion picture film.

In conventional 35 mm motion picture film, an analogue audio signal is optically recorded on a sound track provided longitudinally on the film. When the film is projected, the analogue audio signal recorded on the sound track is reproduced.

The most common prior art method for producing sound movies, i.e., for the storage of audio information on motion picture film, is the well known "variable-area" optical method. In this method, an elongate sound track runs down one side of the film strip, between one set of sprocket holes and the picture frames. This sound track commonly consists of an optically-translucent (or opaque) region whose width varies according to the instantaneous amplitude of the sound. During movie projection, the soundtrack is illuminated from behind with a lamp and lens and then viewed through a slit by a photocell. Due to the varying width of the transparent area of the sound track, the slit receives varying width illumination as the film moves. This causes amount of light which reaches the photocell to vary correspondingly. The voltage which appears at the output of the photocell will vary linearly with amount of light falling on its surface so that the output voltage of the photocell will represent the original audio. However, it is usually not a faithful reproduction of original sound because of distortion created by, e.g., dirt on the filmstrip, wear of the soundtrack on the filmstrip, etc. The distortion usually takes the form of audible pops, scratches, rumbles, hisses, loss of frequency range,etc. Therefore, the conventional way of audio reproduction using an analogue sound track can not provide a powerful and high quality audio reproduction.

In order to provide an audience at a theater with powerful and high quality words, sound effect and music, methods for optically recording a digital audio signal on a motion picture film have been studied. FIG. 1 shows one of proposed methods for recording a digital audio signal. In FIG. 1, perforations 102, 102, 102 --- are provided on both sides of a negative film 101 for a motion picture. A digital sound track 103 is provided on one side of negative film 101.

A reproduced signal from an audio tape 105, a control channel signal from a control channel generating circuit 106 and a time code from a time code generating circuit 107 are supplied to a digital sound processing circuit 108 for signal processing. The output of digital sound processing circuit 108 is supplied to a digital light source 109. Digital light source 109 converts an electric signal from digital sound processing circuit 108 to an optical signal. The optical signal from digital light source 109 is focused on digital sound track 103 by an optical system 110. Thus, a digital audio signal pattern is optically recorded on digital sound track 103. This kind of method is described in United States Patent No. 4,600,280, for example.

As explained above, in the formerly proposed method for recording a digital audio signal, digital sound track 103 is provided on one side of film 101 in the longitudinal direction. However, where digital sound track 103 is longitudinally provided along the side of film 101, digital sound track 103 cannot have a recording area large enough. Due to lack of enough space for the recording digital sound, it is difficult to increase the number of channels or to improve the sound quality by using high sampling frequency and the large number of quantizing bits.

The side edge area of film 101 around perforations 102, 102, 102 --- is subject to damage and dirt as film 101 moves. Therefore, data errors are likely to be generated where original sound track 103 is provided near the side edge of film 101. Furthermore, the conventional analogue sound track cannot be provided in the space because the space is used for digital sound track 103. Therefore, compatibility with the conventional analogue sound track would be lost.

According to a first aspect thereof the invention provides a motion picture film characterised in that digital audio signal patterns are optically recorded in digital audio areas provided between effective image areas of each picture frame.

According to a second aspect thereof the invention provides a motion picture film recording apparatus for recording an audio signal on a motion picture film, characterised by area setting means for setting digital audio areas between effective image areas of each picture frame, and optical recording means for optically recording digital audio patterns in the digital audio areas between the effective image area of each picture frame.

Preferably, according to the second aspect of the invention, digital audio signal patterns are recorded in digital audio areas between effective image areas of each picture frame in such a manner that the digital audio signal is first recorded in a video tape recorder (VTR), the digital audio signal is reproduced at a slower playback speed, and digital audio signal patterns corresponding to the slowly reproduced digital audio signal are recorded on the film by an electric beam recording apparatus.

According to a third aspect thereof the invention provides a motion picture film playback apparatus for reproducing an audio signal recorded on a motion picture film, characterised by photoelectric conversion means for sensing a digital audio signal pattern and converting the digital audio signal pattern into a digital audio signal, and optical means for focusing the digital audio signal pattern image on the photoelectric conversion means.

In a preferred arrangement disclosed in detail hereinbelow, digital audio areas are provided between effective image areas of each picture frame on a film and digital audio signal patterns are optically recorded in these digital audio areas. In these areas, a sufficient number of channels of digital audio signal can be easily recorded with a sufficiently high sampling frequency and a large number of quantizing bits.

The preferred arrangement disclosed below provides a motion picture film, a motion picture film recording apparatus and a motion picture film playback apparatus which make enough recording area available for a digital sound track so that multi channels can be achieved and the sound quality can be improved by using high sampling frequency and a large number of quantizing bits. In the preferred arrangement, the digital audio area is hardly subject to damage and data errors are not likely to happen.

The invention will now be further described, by way of illustrative and non-limiting example, with reference to the accompanying drawings, in which:

FIG. 1 is a perspective view for explanation of a system for recording a digital audio signal on a conventional motion picture film.

FIG. 2 is a plan view showing one embodiment of a motion picture film in accordance with the invention.

FIG. 3 is a plan view for explanation of a motion picture film in accordance with invention.

FIG. 4 is a plan view for explanation of a motion picture film in accordance with invention.

FIG. 5 is a flow-chart for explanation of steps for manufacturing a motion picture film in accordance with the invention.

FIG. 6 is a plan view for explanation of steps for manufacturing a motion picture film in accordance with the invention.

FIG. 7 is a plan view for explanation of steps for manufacturing a motion picture film in accordance with the invention.

FIG. 8 is a perspective view for explanation of steps for manufacturing a motion picture film in accordance with the invention.

FIG. 9 is a plan view for explanation of steps for manufacturing a motion picture film in accordance with the invention.

FIG. 10 is a plan view for explanation of a motion picture film in accordance with invention.

FIG. 11 shows a block diagram of a recording apparatus for recording a digital audio signal on a tape, preceding to recording the digital audio signal on a motion picture film in accordance with the invention.

FIG. 12 shows a timing chart for explanation of a recording apparatus for recording a digital audio signal on a tape, preceding to recording the digital audio signal on a motion picture film in accordance with the invention.

FIG. 13 shows a timing chart for explanation of a recording apparatus for recording a digital audio signal on a tape, preceding to recording the digital audio signal on a motion picture film in accordance with the invention.

FIG. 14 shows a block diagram of an recording apparatus for optically recording the digital audio signal reproduced from the tape onto a motion picture film in accordance with the invention.

FIG. 15 is a timing chart for explanation of an recording apparatus for optically recording the digital audio signal reproduced from the tape onto a motion picture film in accordance with the invention.

FIG. 16 is a side view of one embodiment of a playback apparatus for reproducing a motion picture film in accordance with the invention.

FIG. 17 is a perspective view for explanation of a playback apparatus for reproducing a motion picture film in accordance with the invention.

FIG. 18 is a perspective view for explanation of a playback apparatus for reproducing a motion picture film in accordance with the invention.

Referring to drawings, one of embodiments according to the present invention will be explained hereinafter. Fig. 2 shows an example of a motion picture film 1 to,which the present invention applies. As shown in FIG. 2, digital audio signal patterns are optically recorded in unused areas of motion picture film 1 (digital audio area 6) which remain unused when video images are recorded in each picture frame.

As shown in FIG. 2, plural perforations 2,2,2 --- are provided in line in the longitudinal direction of film 1 along side edges 1 A and 1 B. When the motion picture is playbacked, spools engage with perforations 2,2,2 --- and film 1 moves in the direction of arrow A.

An analogue sound track 3 is provided along one side edge 1A of film 1. This analogue sound track 3 is equivalent to the analogue sound track of a conventional motion picture film. Each picture frame 4,4,4 --- of film 1 has effective image area 5,5,5 --- . Picture images are optically recorded in effective image areas 5,5,5 ---. When a light is projected on moving film 1 in a reproduction mode, picture images recorded on effective image areas 5,5,5 --- are projected on a screen.

Each picture frame 4,4,4 --- has an unused area. As shown in FIG. 3, when 35 mm film 1 is used, the length of each picture frame 4,4,4 ---including unused area is corresponding to four perforations 2. Since the length of four perforation is 19.05 mm, length H of each frame 4,4,4 --- is also 19.05 mm. The height-width ratio of a vista size 35 mm film is 1:1.85. Therefore, when width W of film 1 is 21.95 mm according to Japanese Industrial Standards, high HP-VISTA of effective image area 5,5,5 ---of vista size film is HP-VISTA = 21.95/1.85 = 11.86 mm. Accordingly, when the vista size film is used, each picture frame 4,4,4 --- has unused area whose height is 19.05 - 11.86 = 7.19 mm.

The height-width ratio of a high definition television is 9:16. Thus, when a motion picture film is made from high definition television, height HP-HDTV of effective image area 5,5,5 --- of the film converted from HDTV system is HP-HDTV = 21.95 x (9/16) = 12.346 mm as shown in FIG. 4 since width W of film 1 is 21.95 mm according to Japanese Industrial Standards. Accordingly, when the motion picture is converted from HDTV system each picture frame 4,4,4 --- has unused area whose height is 19.05 - 12.346 = 6.704 mm. In a motion picture film embodying the present invention, these unused areas are used as digital audio areas. Digital audio signal corresponding to recorded picture image is recorded in the digital audio areas.

When a vista size film is used, unused areas with 7.19 mm height become available and the height HA-VISTA of digital audio area 6,6,6. can be up to 7.19 mm as shown in FIG. 3. When a motion picture is converted from HDTV system, unused areas with 7.19 mm height become available and the height HA-HDTV can be up to 6.704 mm as shown in FIG. 4. The height of mask of a motion picture is 11.33 mm. It is slightly less than those of effective image area of a vista size film and a film converted from HDTV system. Therefore, the actual heights HA-VISTA and HA-HDTV of digital audio areas of a vista size film and a film converted from HDTV system can be practically expanded up to 19.05 - 11.33 = 7.72mm.

A VTR for HDTV, for example, is used to record a digital audio signal. The digital audio signal is then reproduced and optically recorded by EBR (electric beam recorder) as digital audio signal patterns on a film. FIG. 5 shows a flow-chart of steps for recording digital audio signal patterns in digital audio areas 6 in the areas not used for picture images. FIGS. 6 to 9 show each step for the recording.

In FIG. 5, digital audio signal is first recorded on a magnetic tape by using a HDTV VTR (step 11). At this stage, as explained later, digitizing six channels of audio signal, multiplexing the six channels of audio signal, and timing and time-axis processing them are done so that the digital audio signal can be recorded in digital audio areas 6. An analogue audio signal is recorded by a VTR to form an analogue sound track. The digital audio signal recorded in the HDTV VTR is reproduced. Based on the reproduced digital audio signal, an EBR records digital audio signal patterns on a film (step 12). As explained later, timing setting is adjusted so that the digital audio signal is recorded on a green picture frame of the motion picture film.

FIG. 6 shows a film 31 on which the digital audio signal patterns are recorded in this way. In FIG. 6, plural perforations 32,32,32 ---are arranged in line along the side edges 31 A and 31 B of film 31. The size of areas 36,36,36 --- of each picture frame 34,34,34 -- of film 31 is corresponding to that of the digital audio areas. The digital audio signal patterns are exposed on these areas 36,36,36 --- by the EBR. Other areas 37,37,37 --- of each picture frame 34,34,34 --- are made black by the EBR so that they can function as a mask in the succeeding process. After the digital audio signal patterns are exposed on area 36, analogue sound track 33 is formed in one side edge are 31 A of film 31 (step 13). FIG. 7 shows film 31 on which analogue sound track 33 is formed.

As shown is FIG. 8, a mask 38 having openings 39 corresponding to area 36 is put on film 31 having digital audio signal recorded thereon and they are exposed together(step 14). An exposed film is then developed (step 15). FIG. 9 shows a sound image negative film 41 on which digital patterns are recorded. In FIG. 9, sound image negative film 41 has plural perforations 42,42,42 --on its side edge areas 41A and 41B. An analogue sound track 43 is provided in one side edge area 41A. Digital audio signal patterns are recorded in areas 46,46,46 --- of each picture frame 44,44,44 --- of film 41. A color positive film for theater use is made by two steps of exposure; one is with video image negative film (not shown) and the other is with sound image negative film 41 formed as above.

As explained later, the height HA-HDTV of digital audio area 6 on a film converted from HDTV system shown in FIG. 4 is equivalent to 461 horizontal lines in HDTV system. The number of pictures of 35 mm film is 24 per second. The number of pixels in one horizontal line in HDTV system is 1920. Accordingly, the bit rate of digital signal recordable on a 35 mm motion picture film is as follows:

$$1920 \times 461 \times 24 = 21242.9 \text{ k bit/sec} \quad (1)$$

When a sampling frequency is chosen at 48 kHz and 16 bits are used for quantizing, the bit rate of one channel of digital audio signal is 16 × 48 kHz = 768 k bit/sec. Canceling the increase of the number of bits necessary for error correction code and the decrease of the same due to serial multiplexing process, the total number of bit necessary to transmit the digital signal is as follows:

$$16 \times 48 = 768 \text{ kbit/sec} \quad (2)$$

If two additional audio channels are added to conventional four channels currently used for a 35 mm motion picture film and accordingly, total six channel are used, the number of bits available to each channel is as follows:

$$21242.9 / 6 = 3540 \text{ kbit/sec} \ldots \quad (3)$$

Accordingly the size of one bit on the film is as follows:

Vertical direction 12346 / 1035 = 11.9μm

Horizontal direction 21.95 / 1920 = 11.4μm

This size is the smaller limit which can be achieved when a positive film is printed from a negative film, using the most advanced technology. If the size of one bit is doubled in both vertical and horizontal directions, the number of bits available to each channel is as follows:

$$3540/4 = 885 \text{ kbit/sec} \quad (4)$$

Subtracting the number of bits determined by equation (2) from the same determined by equation (4) , 117 k extra bits will be available. Taking advantage these extra bits, as shown in FIG. 10, starting bits 7 for reading purpose and a burst signal 8 which can be used as a clock signal for reproducing can be added to digital audio patterns in digital audio areas 6.

FIG. 11 shows a recording apparatus for recording six channels, for example, of audio signals onto the HDTV VTR. In FIG. 11, six channels of audio signals are respectively supplied to input terminals 51 A to 51 F. The audio signals are then supplied from input terminals 51A to 51F to A/D converters 52A to 52F respectively. A/D converters 52A to 52F sample the input audio signals at 48kHz and digitize them by 16 bits.

Since the number of frames in a 35 mm motion picture film system is 24 per second and the sampling frequency in HDTV system is 74.25 MHz, the sampling frequency in this embodiment is as follows:

$$74.25 \times (24/30) = 59.4 \text{ MHz}$$

Horizontal line frequency 27000Hz is calculated by dividing the sampling frequency by 2200 and therefore, the number of fields per second is as follows:

$$27000/1125 = 24$$

The digital audio signals are supplied to a multiplexer 53. A timing signal generating circuit 54 supplies a synchronizing signal corresponding to 24 frames per second to multiplexer 53. Multiplexer 53 stores and multiplexes the digital audio signals of one frame for six channels. Multiplexer 53 outputs the digital audio signals of one frame in a period corresponding to the height of the digital audio area. The period corresponding to the digital audio area is calculated as explained hereinafter.

As shown is FIG. 4, a film converted from HDTV system provides a digital audio area of which height HA-HDTV is up to 6.704 mm. Considering allowance, digital audio area's height HA-HDTV is made 5.5 mm. The number of effective horizontal lines in one frame in HDTV system is 1035. The height HA-HDTV of effective picture image area of the film converted from HDTV system is 12.346 mm. Accordingly, the height HA-HDTV of the digital audio area is corresponding to $1035 \times (5.5 / 12.346) = 461$ horizontal lines. Therefore, multiplexer 53 may output the stored digital audio signal for a period corresponding to 461 horizontal lines. The digital audio signal is once stored in multiplexer 53 as shown in FIG. 12A and outputted in a period corresponding to 461 horizontal lines as shown in FIG. 12B.

In FIG. 11, multiplexer 53 alternatively supplies the digital audio signals to an odd number field memory 55A and an even number memory 55B. Memories 55A and 55B are controlled by a read/write signal from a timing signal generating circuit 54 in a manner that when one of the memories is in a read mode, the other is in a write mode. The outputs of memories 55A and 55B are supplied to a switching circuit 56. The selection by switching circuit 56 is sequentially changed every field of HDTV system in response to a timing signal from timing signal generating circuit 54. The number of fields in a 35 mm film system is 24 frames per second while that of HDTV system is 60 field per second. In order to match the number of frames in both systems, switching circuit 56 skips one frame every five frames in HDTV system. As shown in FIG. 13, when the switch position of switching circuit 56 is at P0 and P5, switching circuit 56 provides no output so that one field is skipped every five fields. Accordingly, switching circuit 56 outputs twenty four picture images per second. The output of switching circuit 56 is supplied to an adding circuit 57. A black level signal SB for blackening portions of film other than digital audio area 6 is supplied to adding circuit 57. The output of adding circuit 57 is supplied to a green signal input terminal of HDTV VTR 58. Thus, six channels of digital audio signals are recorded on a magnetic tape in HDTV VTR 58. At this time, a synchronizing signal SYNC and switching timing signal for switching circuit 56 are recorded in VTR 58.

FIG. 14 shows an apparatus for reproducing the digital audio signals recorded in HDTV VTR 58 and for optically recording the reproduced signal as digital audio signal patterns on digital audio areas 6, using EBR 60. In FIG. 14, HDTV VTR 58 reproduces the signal, for example, at 1/30 slow speed. Because EBR 60 optically records the video signal on a black and white film after the video signal is decomposed into red, green and blue components, if HDTV VTR 58 reproduces the video signal at real time speed, it is difficult for EBR 60 to move the film silently. The reproduced signal from an output terminal of HDTV VTR 58 is supplied to a switching circuit 61. A timing signal generating circuit 62 supplies a timing signal to switching circuit 61. A switch position selected by switching circuit 62' is sequentially changed in response to the timing signal at timing of one horizontal line of the signal reproduced by HDTV VTR 58.

In order to match the number of fields per second in the HDTV system and that of the 35 mm film system, switching circuit 61 skips one field every five fields. When the switch position of switching circuit 61 is at P00 and P05, switching circuit 61 provides no outputs so that one field is skipped every five fields. The output of switching circuit 61 is supplied to memories 63A and 63B. Memories 63A and 63B are controlled by timing signal generating circuit 62 in a manner that when one of the memories is in a read mode, the other is in a write mode, the outputs of memories 63A and 63B are supplied to a switching circuit 64. The switching operation of switching circuit 64 is changed in response to a timing signal from timing signal generating circuit 62 at the timing corresponding to the number of fields per second in the 35 mm film system.

In 35 mm film system, a color film comprises three frames each of which is corresponding to three primary colors. By changing the switch position of switching circuit 64, the digital audio signal is outputted, as shown in FIG. 15, in a period corresponding to digital audio area 6, every three fields of 35 mm film. The reproduced signal is supplied through a drive circuit 65 to EBR 60. A throw pin of EBR 60 is controlled by a throwing motor drive circuit 66 which is controlled by timing signal generating circuit 62. EBR 60 optically records the digital audio signal patterns on the digital audio areas of film 65.

FIG. 16 shows one embodiment of projection apparatus for reproducing the digital audio signal patterns recorded on the digital audio areas on the film. In FIG. 16, reference numeral 71 is a main apparatus, 72 is a sprocket slowly rotating for drawing the film which is wound around a reel 23. An audio signal reproducing apparatus is provided in an attachment 74, so-called penthouse, located at a film supply portion of main apparatus 71. The film is moved by sprocket 72 rotating constantly. In FIG. 16, reference numerals 75,76 and 77 respectively show a projection lens, a projection light source and a constant speed sprocket for supplying a film to a take-up reel 78. Sprockets 72 and 77 have the same film supply speed. In penthouse 74, a primary portion as shown in FIG. 17 is positioned. In FIG. 17, reference numerals 81,82 and 83 respectively show a projected films, a fixed roller rotatably mounted and a roller for guiding the film by pushing the edge of the film. Roller axes of rollers 82 and 83 are completely separated. As shown in FIG. 18, a cylindrical lens 87 is provided near film 81 and between rollers 82 and 83. A light source 88 is provided behind them. A line tungstic filament type source is preferable for this use. If a halogen lamp is used, it is very bright and effective.

A shield for covering unnecessary portion of light source 88, an infrared cut filter for reducing infrared rays heating film 81 , and a reflector are not shown. The position of focal point of cylindrical lens 87 is selected so as to focus the line filament image on film 81 . The line light lights up film 81 from behind it through cylindrical lens 87. The longitudinal direction of the line light is perpendicular to the moving direction of film 81 . The film image projected by the line light goes through a lens 89 and reaches a beam splitter 90. Beam splitter 90 splits the light into two different directions which are perpendicular to each other. Beam splitter 90 comprises two right-angle prisms whose hypotenuse planes are attached with each other. One of the hypotenuse planes is translucently coated with aluminum. Beam splitter 90 can split visible rays. Adjusting the thickness of the coating, 50%-50% splitting is possible.

The film image is focused on slit windows 94A, 94B and 94C of CCD photosensors 91,92 and 93. The reasons for using three CCD photosensors 91,92 and 93 are that the film image is divided into several portions, digital recording image aligned in the direction of the film width can be easily made parallel with the slit windows and therefore so-called "azumi adjustment" can be easily done and that inexpensive CCD photosensors operated with slow speed read clock can be used. The number of CCD photosensors used does not have to be limited to three but CCD photosensors can be provided for every digital track. The width of slits 94A, 94B and 94C is so selected that the digital signals can be easily read. Because the sound image can be overlapped on the image sensing planes of CCD photosensors 91,92 and 93 by adjusting the position or focal length of lens 89, no missing portion of the sound image due to the division of CCD photo sensors 91,92 and 93 exists.

According to the above-described arrangement, digital audio areas are provided between effective picture image areas of each frame of a film and digital audio signal patterns are optically recorded on the digital audio areas. These areas are large enough to record enough channels of digital audio signals sampled with substantially high frequency and quantized with the large number of bits, corresponding to the picture image recorded together. According to the present arrangement, because digital audio areas are positioned at area not subject to damages, data error is not likely to happen. Furthermore, a conventional analogue sound track can coexist.

## Claims

1. A motion picture film in which digital audio signal patterns are optically recorded in digital audio areas provided between effective image areas of each picture frame.

2. A motion picture film recording apparatus for recording a digital audio signal on a motion picture film, the apparatus comprising:

   area setting means for setting digital audio areas between effective image areas of each picture frame; and

   optical recording means for optically recording digital audio patterns in said digital audio areas between said effective image area of each said picture frame.

3. A motion picture film recording apparatus according to claim 2, wherein said digital audio signal patterns are recorded in said digital audio area between said effective image area of each said picture frame in such a manner that a digital audio signal is first recorded in a VTR, said digital audio signal is reproduced at slower playback speed and said digital audio signal patterns corresponding to slowly reproduced said digital audio signal are recorded on said motion picture film by an electric beam recording apparatus.

4. A motion picture film playback apparatus for reproducing a digital audio signal recorded on a motion picture film, the apparatus comprising:

photoelectric conversion means for sensing a digital audio signal pattern image and converting said digital audio signal pattern into a digital audio signal; and

optical means for focusing said digital audio signal pattern image on said photoelectric conversion means.

FIG. 1

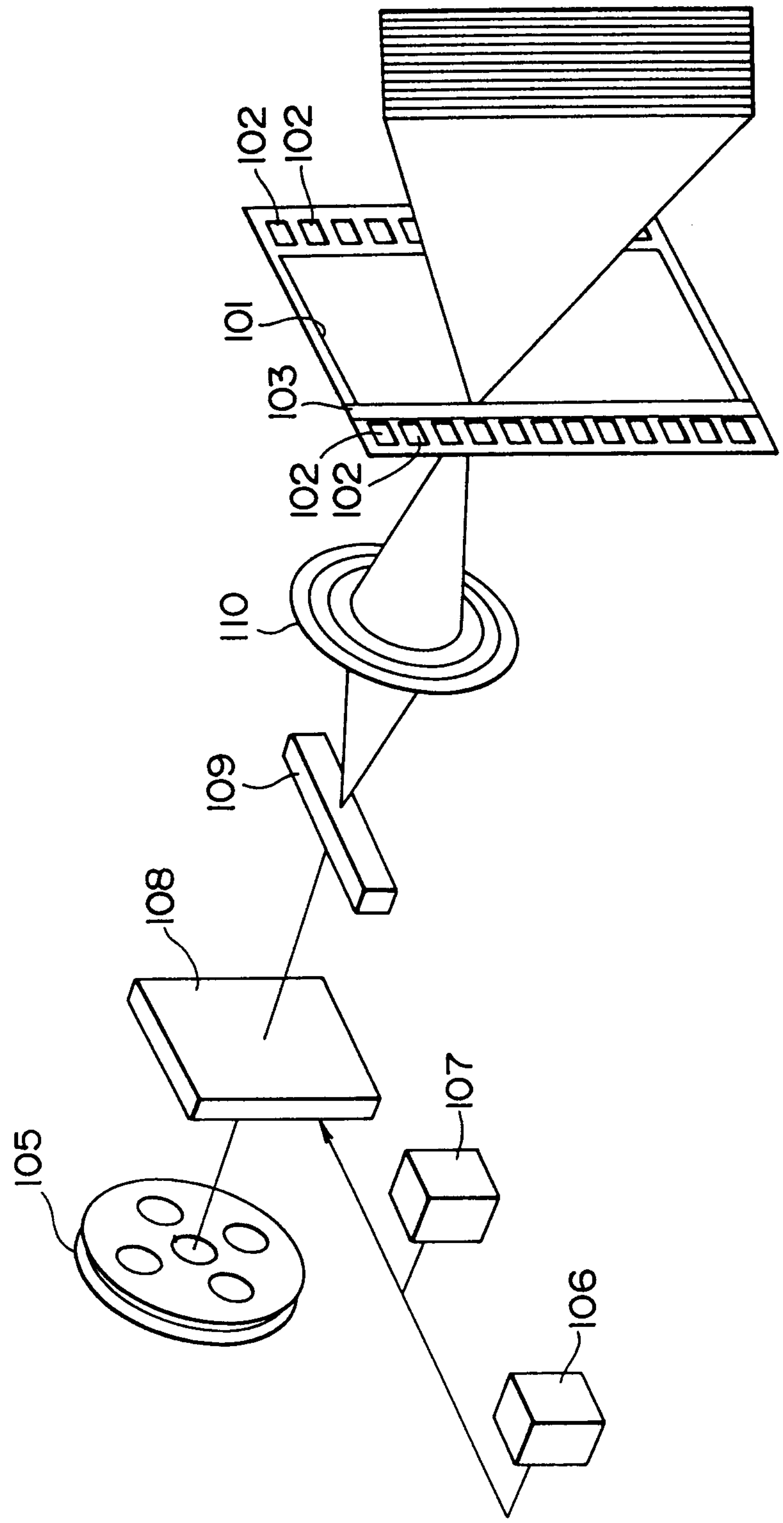

FIG. 2

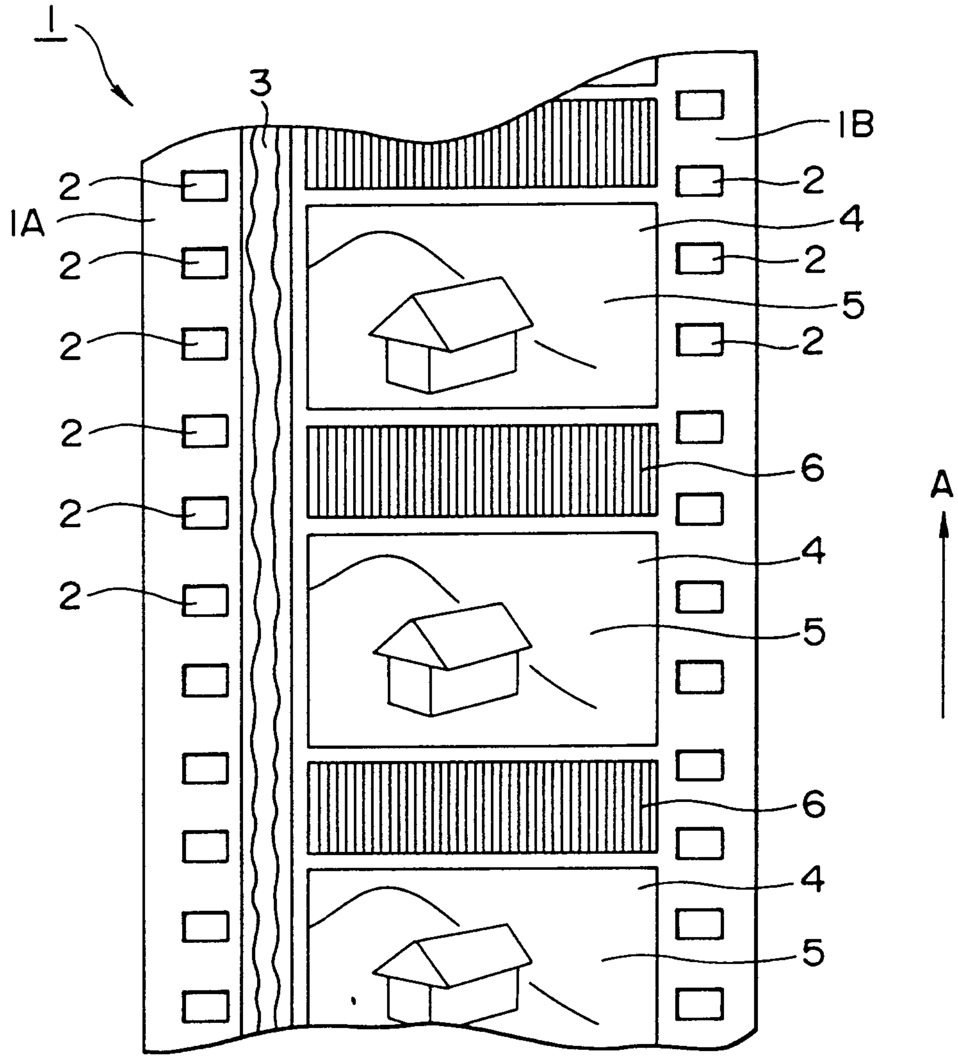

# FIG. 3

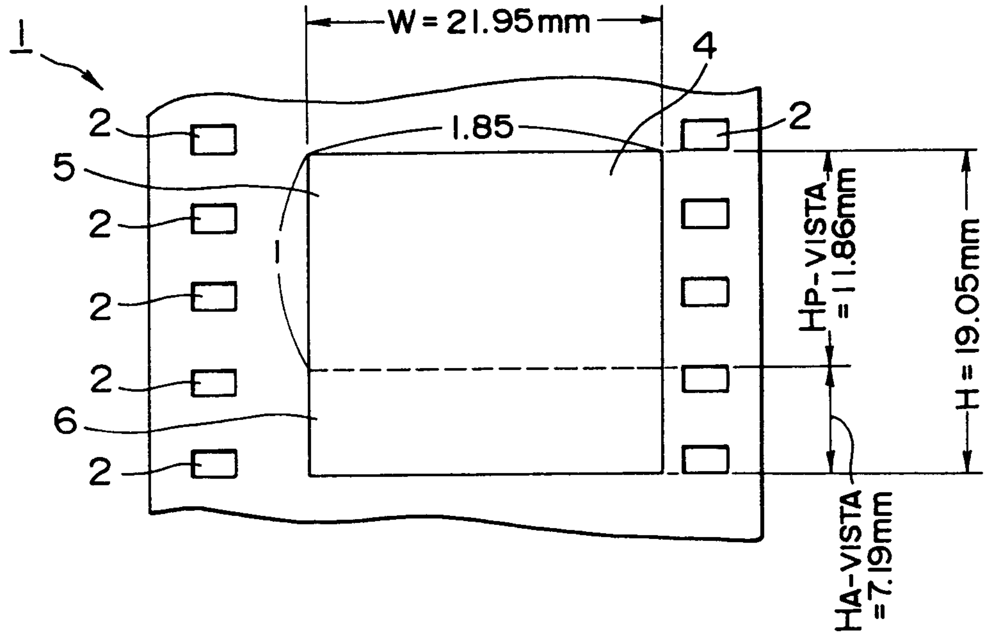

W = 21.95mm
1
4
2
1.85
5
2
2
2
6
2
Hp-VISTA =11.86mm
H = 19.05mm
HA-VISTA =7.19mm


# FIG. 4

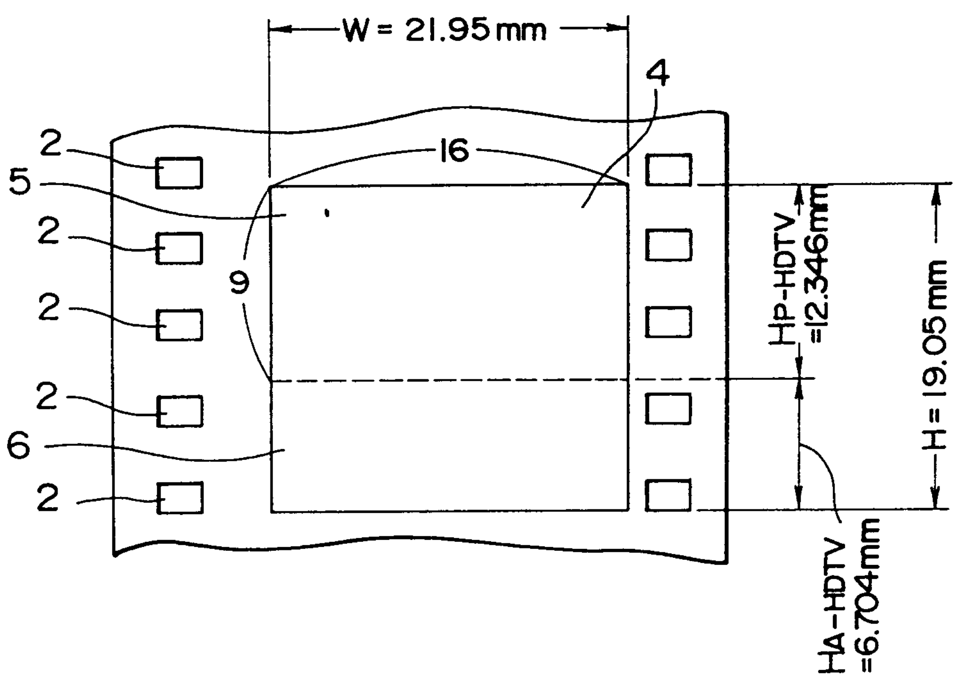

W = 21.95mm
4
2
16
5
2
9
2
2
6
2
Hp-HDTV =12.346mm
H = 19.05mm
HA-HDTV =6.704mm

FIG. 5

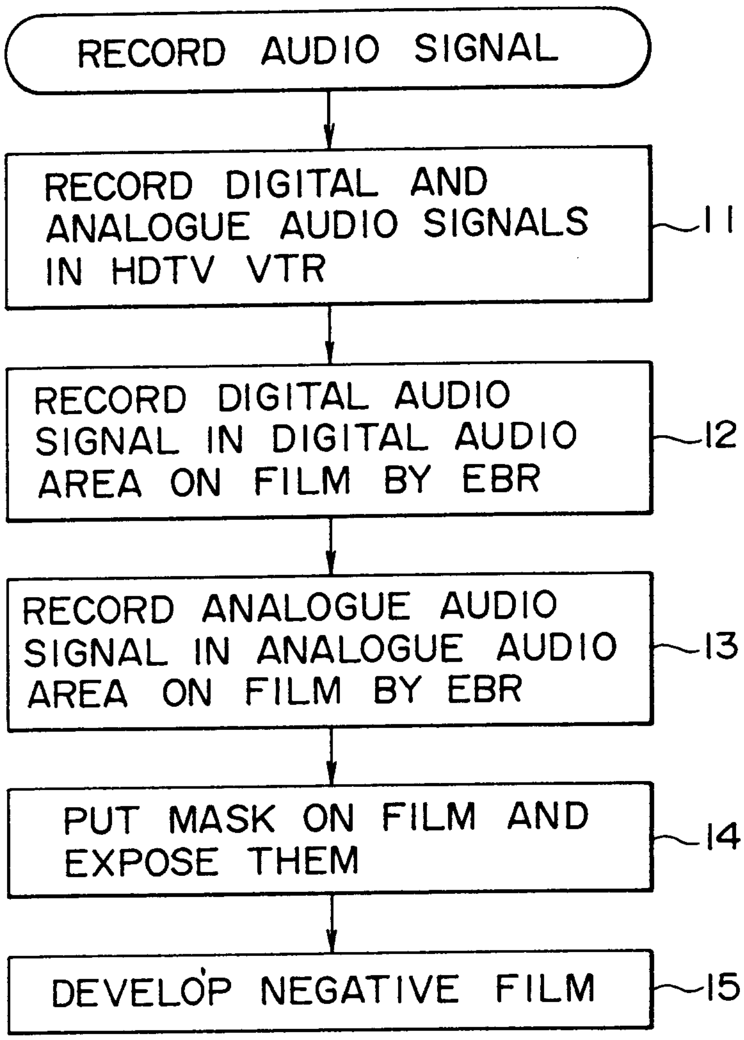
RECORD AUDIO SIGNAL
RECORD DIGITAL AND ANALOGUE AUDIO SIGNALS IN HDTV VTR
11
RECORD DIGITAL AUDIO SIGNAL IN DIGITAL AUDIO AREA ON FILM BY EBR
12
RECORD ANALOGUE AUDIO SIGNAL IN ANALOGUE AUDIO AREA ON FILM BY EBR
13
PUT MASK ON FILM AND EXPOSE THEM
14
DEVELOP NEGATIVE FILM
15

# FIG. 6

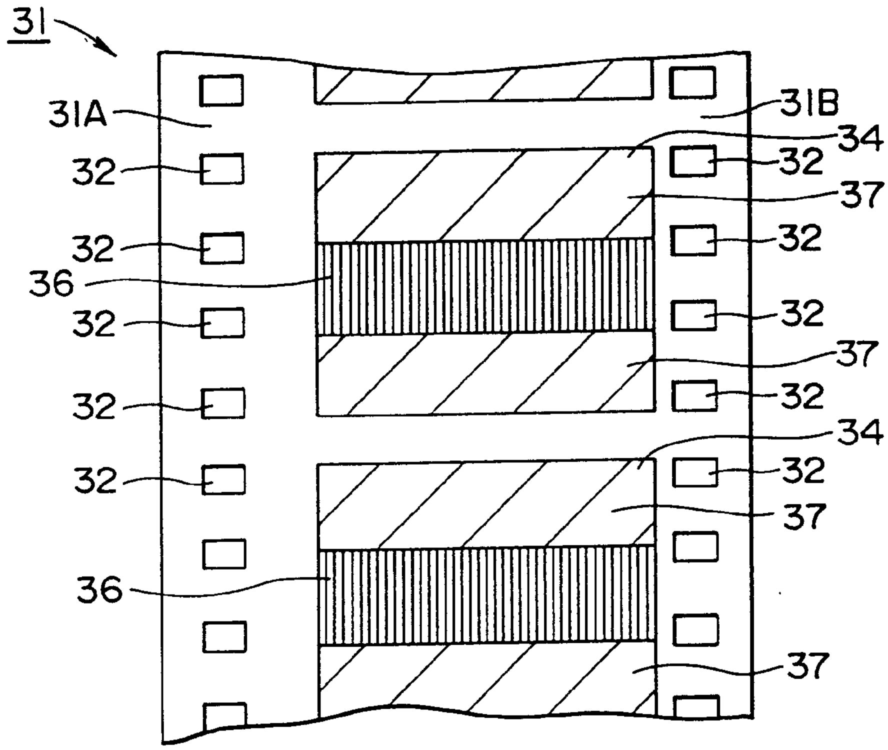


# FIG. 7

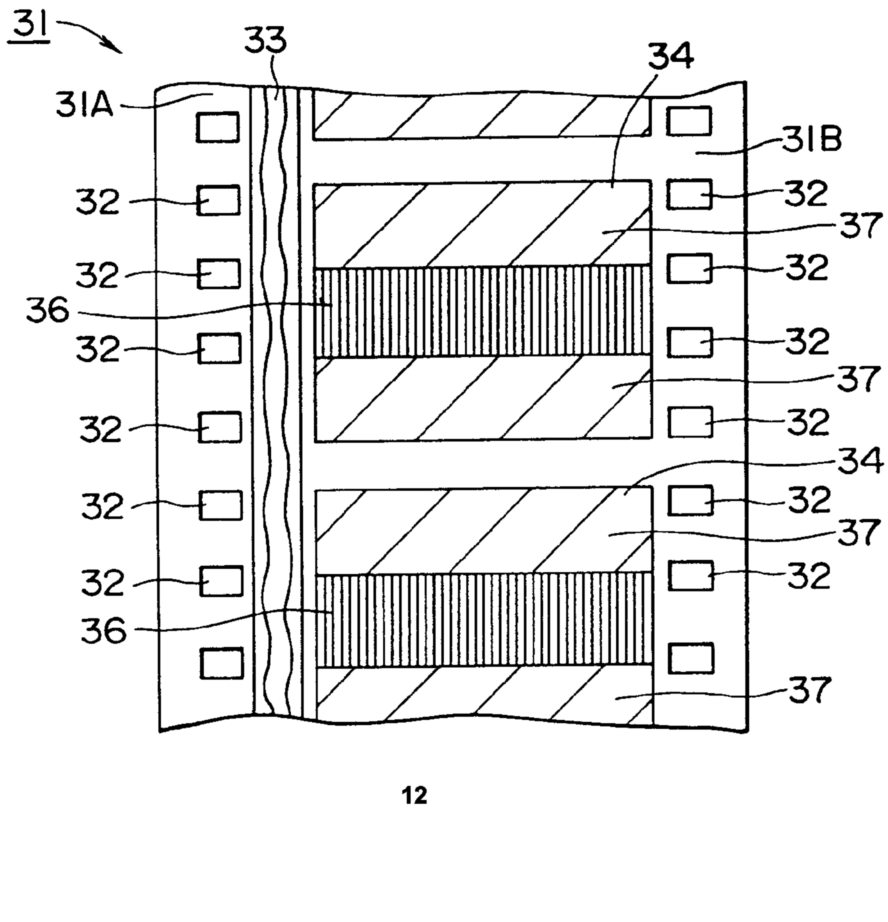

FIG. 8

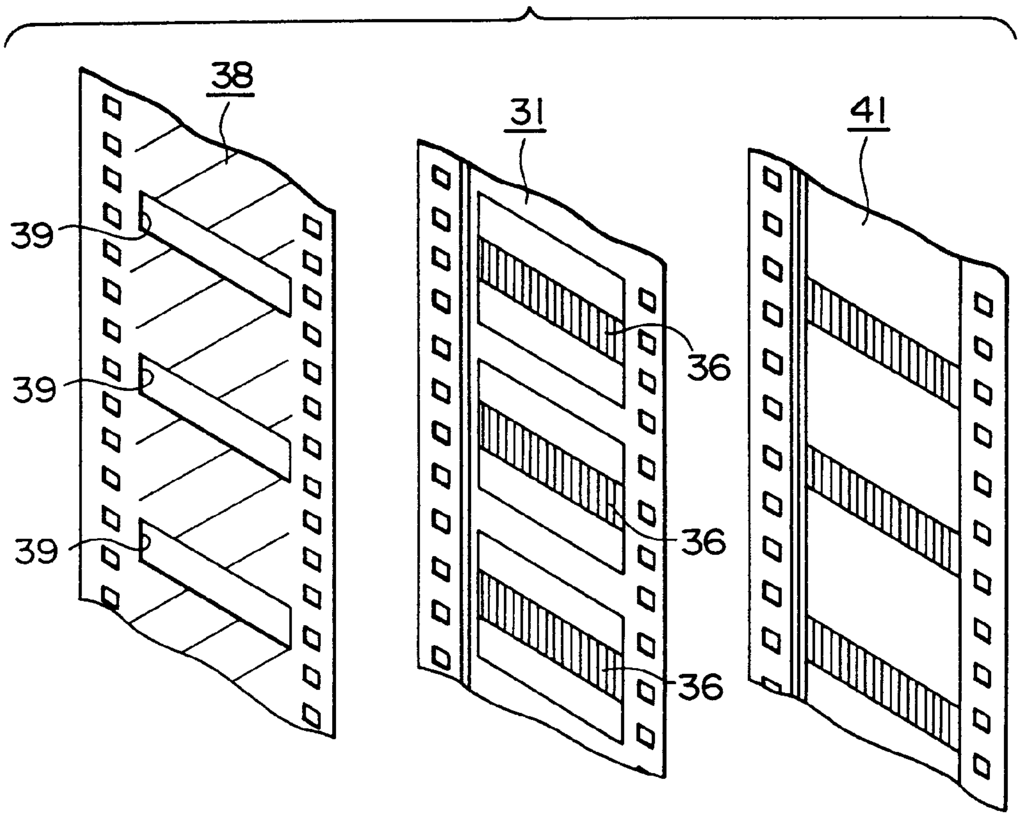
38
31
41
39
39
39
36
36
36

FIG. 9

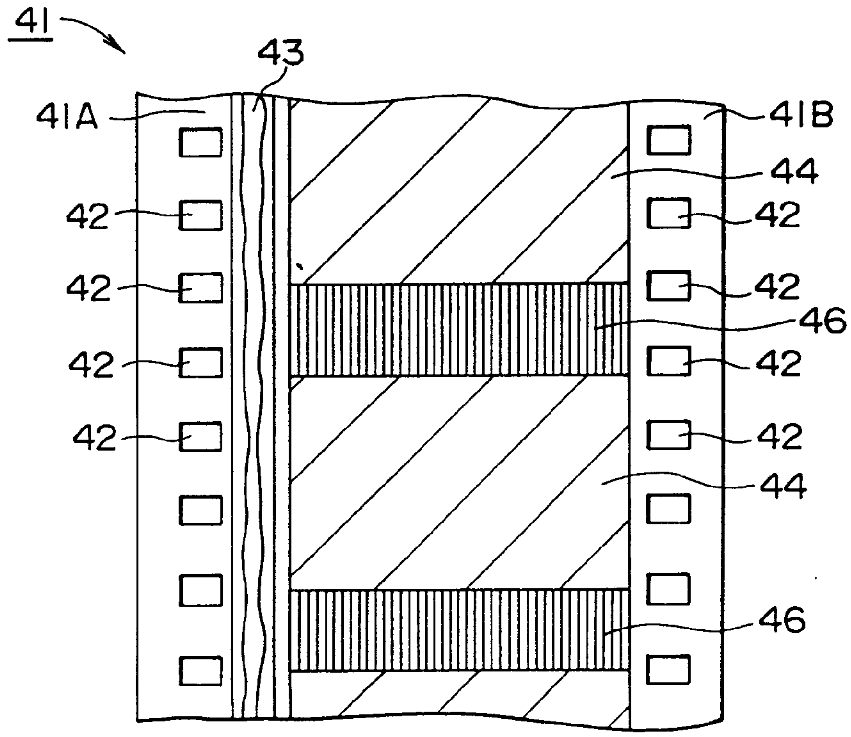
41
43
41A
41B
44
42
42
42
42
42
42
42
42
46
44
46

FIG. 10

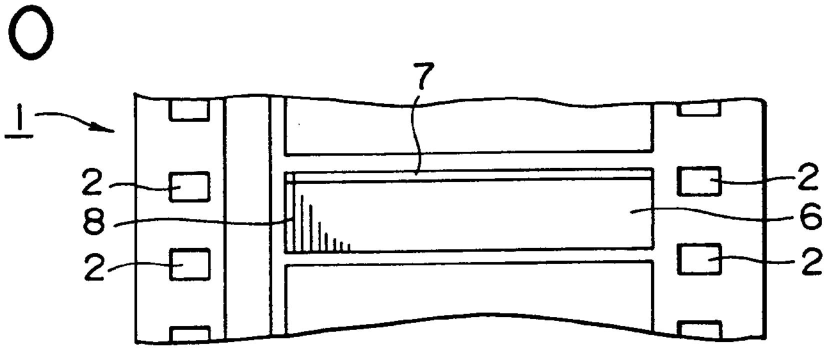


FIG. 12A

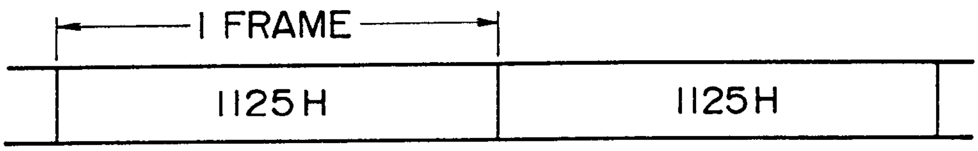


FIG. 12B

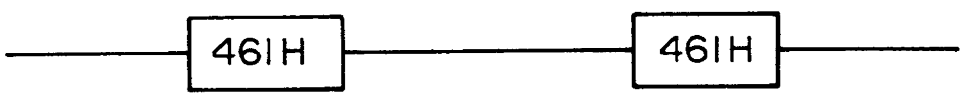


FIG. 13

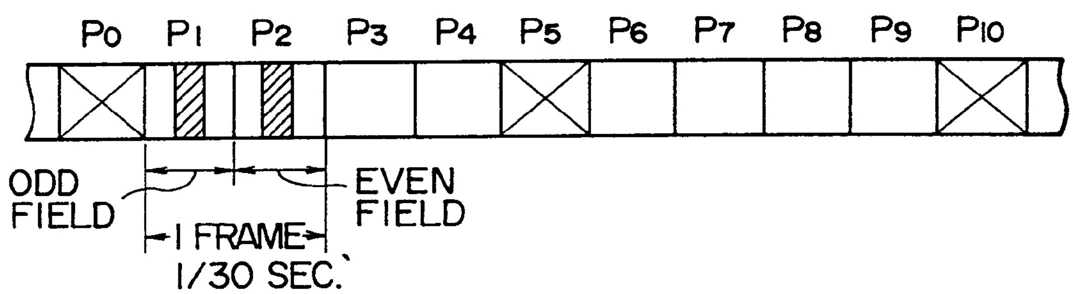


FIG. 15

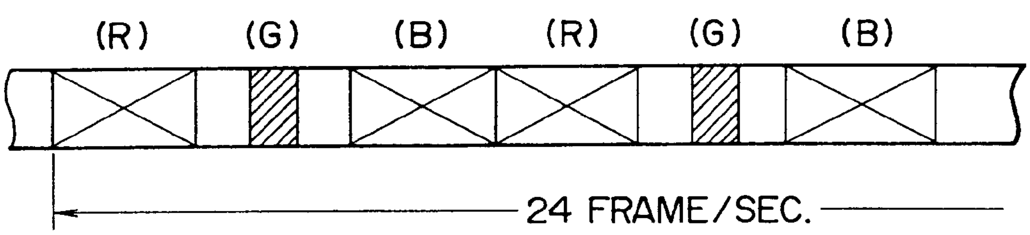

FIG. 11

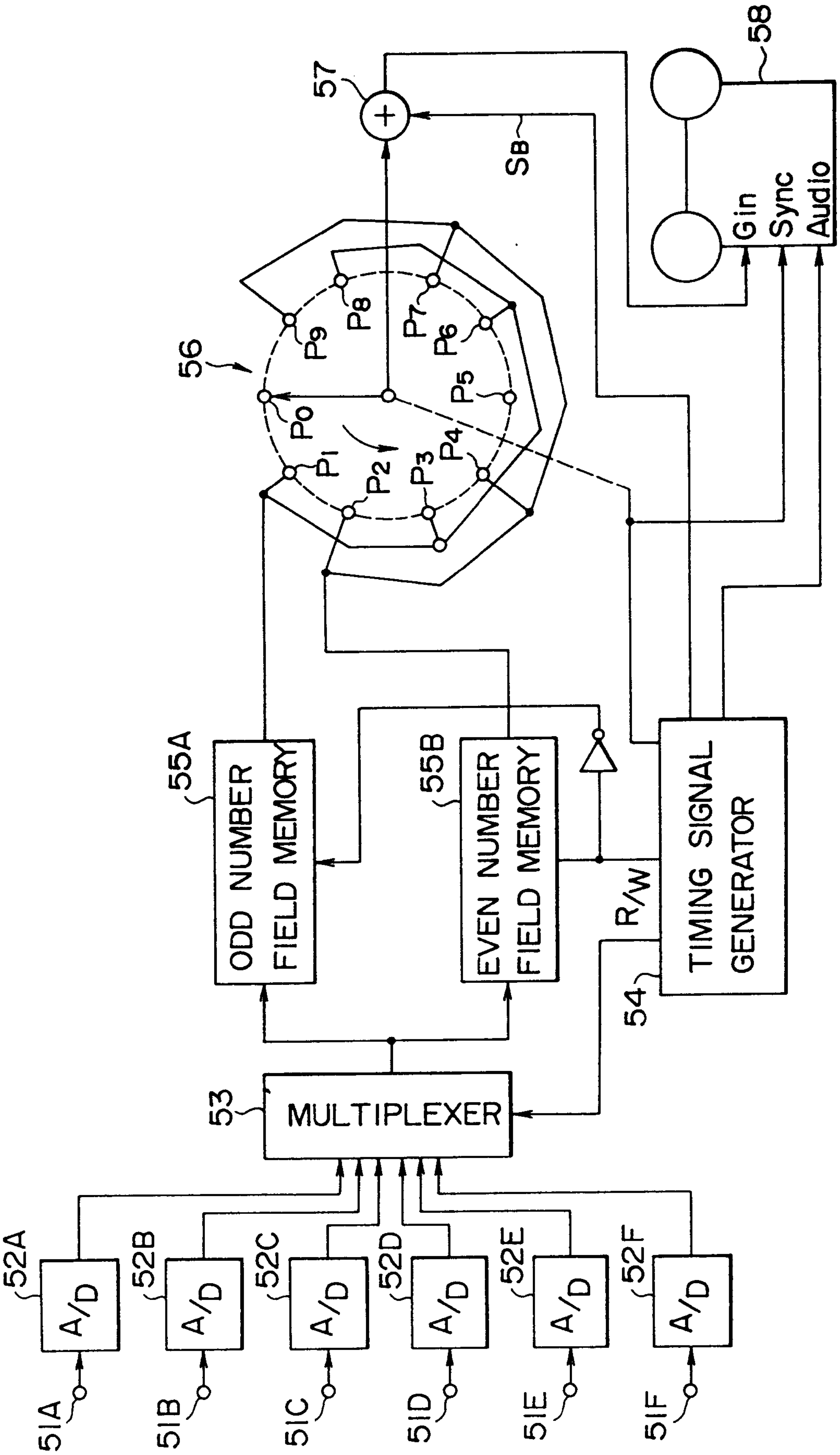
51A
51B
51C
51D
51E
51F
52A
52B
52C
52D
52E
52F
A/D
53
MULTIPLEXER
55A
ODD NUMBER FIELD MEMORY
55B
EVEN NUMBER FIELD MEMORY
R/W
54
TIMING SIGNAL GENERATOR
56
P0
P1
P2
P3
P4
P5
P6
P7
P8
P9
57
SB
58
Gin
Sync
Audio

FIG. 14

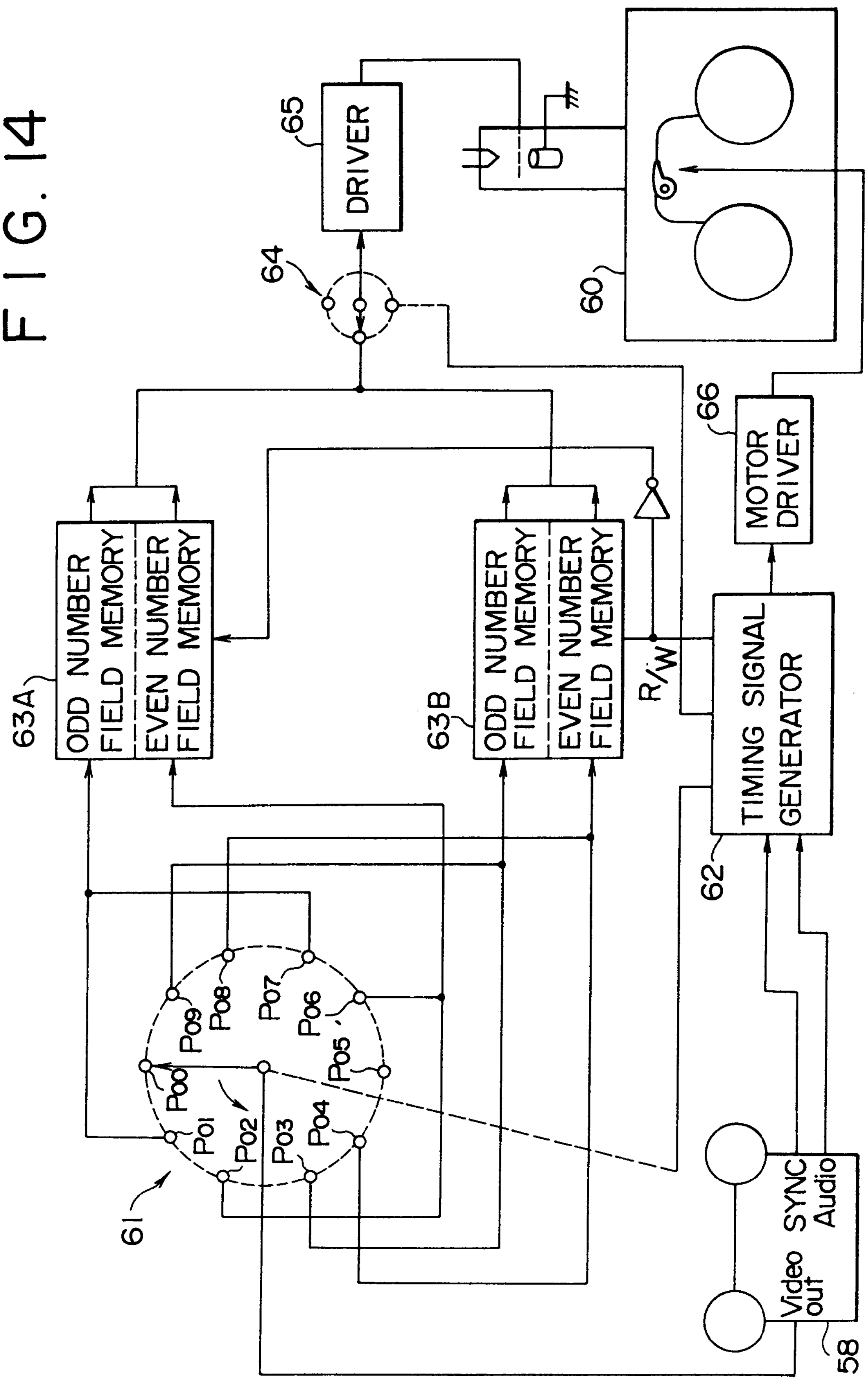
63A
ODD NUMBER FIELD MEMORY
EVEN NUMBER FIELD MEMORY
63B
ODD NUMBER FIELD MEMORY
EVEN NUMBER FIELD MEMORY
R/W
64
65
DRIVER
60
66
MOTOR DRIVER
TIMING SIGNAL GENERATOR
62
61
P00
P01
P02
P03
P04
P05
P06
P07
P08
P09
Video out
SYNC
Audio
58

FIG. 16

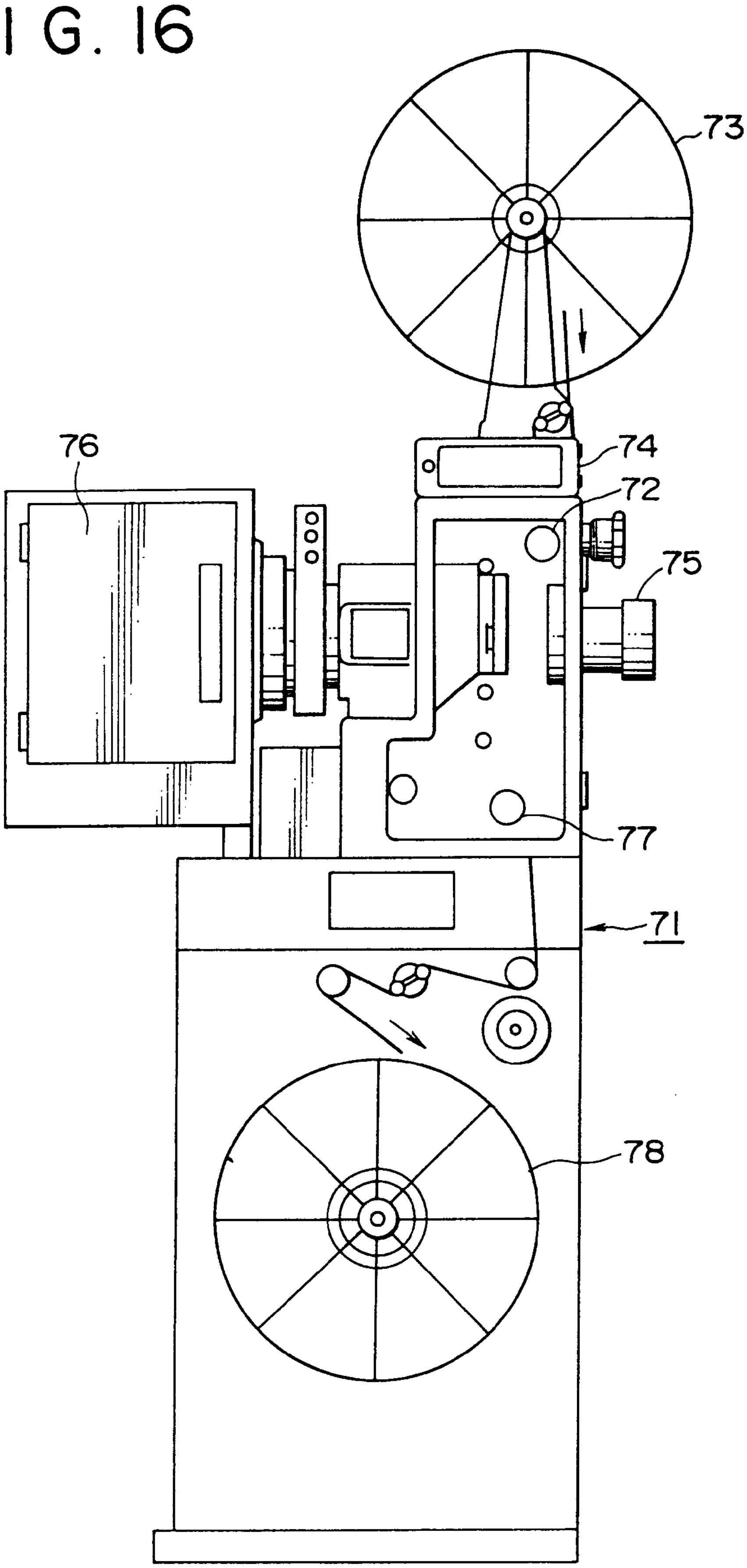

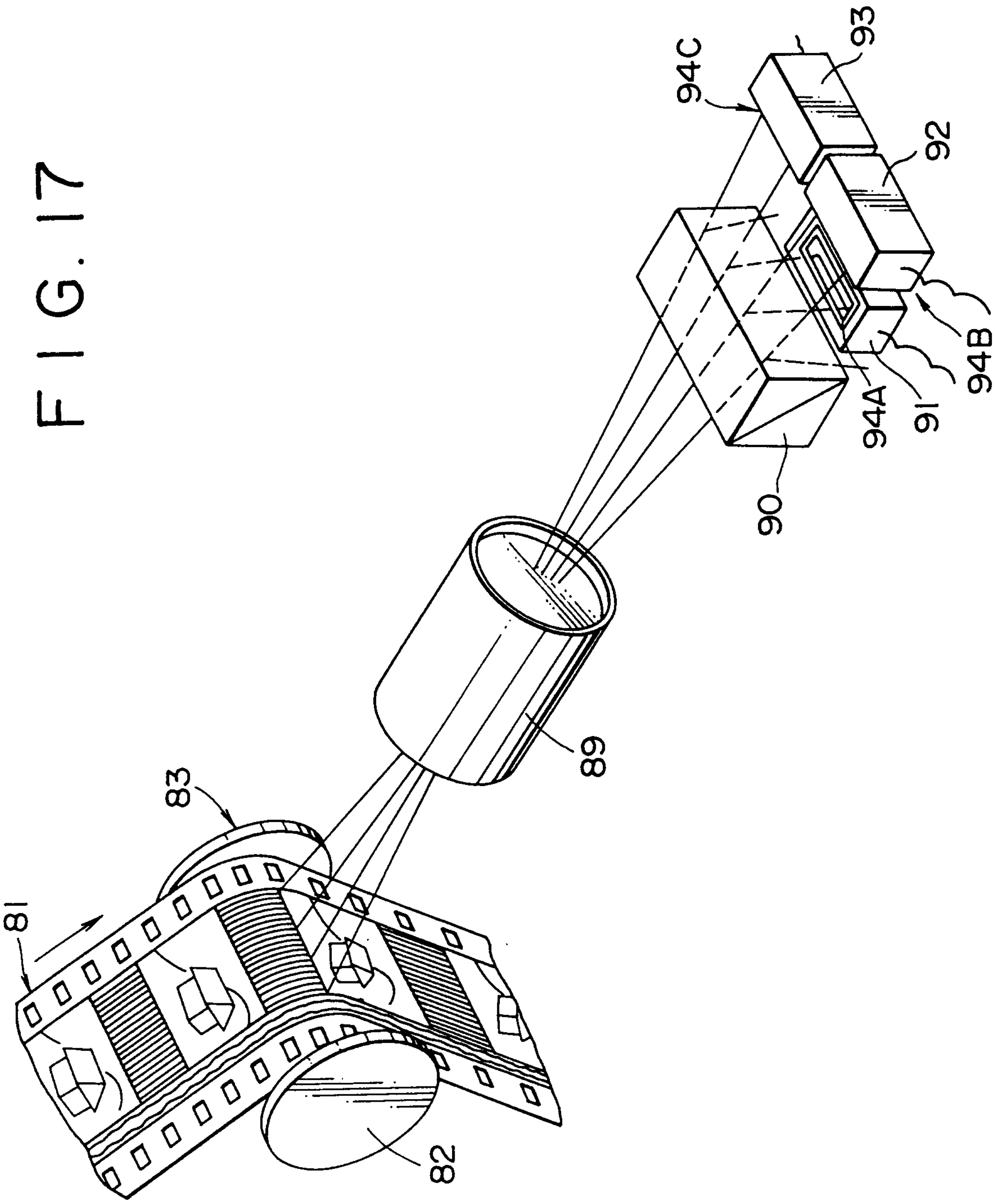


FIG. 17

FIG. 18

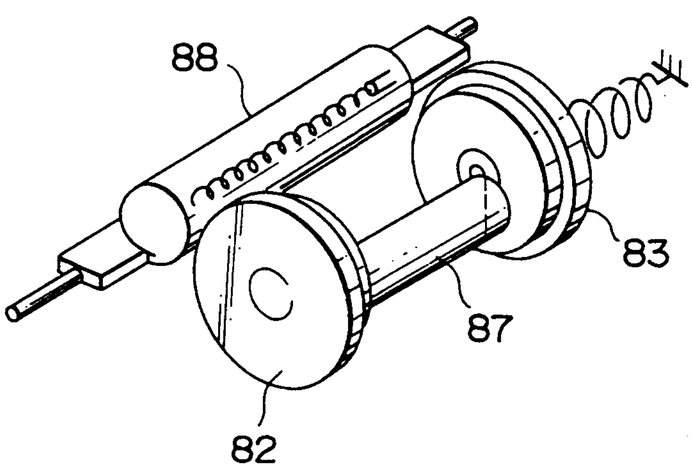

European Patent Office

# EUROPEAN SEARCH REPORT

Application Number
EP 93 30 2198

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | IMAGE TECHNOLOGY (JOURNAL OF THE BKSTS) vol. 72, no. 7, July 1990, LONDON GB pages 69 - 70 'CINEMA DIGITAL SOUND' | 4 | G03B31/02<br>G11B7/00 |
| Y | * figures * | 1,2 | |
| A | | 3 | |
| Y | US-A-3 508 817 (HNILICKA) | 1,2 | |
| A | * claim 1; figure 1 * | 3,4 | |
| P,X | US-A-5 101 397 (BANJO) | 1,2 | |
| P,A | * column 5, line 1 - line 10; figure 6 * | 3,4 | |

TECHNICAL FIELDS SEARCHED (Int. Cl.5 )

G11B
G03B
G03C

The present search report has been drawn up for all claims

| Place of search | Date of completion of the search | Examiner |
|---|---|---|
| THE HAGUE | 21 JUNE 1993 | ROMEO V.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)